# EUROPÄISCHE PATENTSCHRIFT

(11) **EP 2 780 172 B1**
(45) Veröffentlichungstag und Bekanntmachung des Hinweises auf die Patenterteilung: **23.03.2016**
(21) Anmeldenummer: 12770128.2
(22) Anmeldetag: 10.10.2012
(51) Int. Cl.: B41M 5/26

(54) **LASERMARKIERTES POLYMERES WERKSTÜCK**
LASER-MARKED POLYMER WORKPIECE
PIÈCE USINÉE POLYMÈRE MARQUÉE AU LASER

(30) Priorität: 17.11.2011 EP 11189471
(43) Veröffentlichungstag der Anmeldung: 24.09.2014
(73) Patentinhaber: Saint-Gobain Glass France, 92400 Courbevoie (FR)
(72) Erfinder: SPINDLER, Oliver, 71549 Auenwald (DE)
(74) Vertreter: Lendvai, Tomas
(86) Internationale Anmeldenummer: PCT/EP2012/069994
(87) Internationale Veröffentlichungsnummer: WO 2013/072142

(56) Entgegenhaltungen:
- WO-A1-2006/037973
- WO-A1-2010/019194
- WO-A1-2010/023102
- WO-A2-2010/054077
- DE-A1- 19 732 306
- DE-A1- 19 944 372
- DE-A1-102009 028 937

## Beschreibung

Die Erfindung betrifft ein lasermarkiertes polymeres Werkstück, ein Verfahren zu dessen Herstellung und dessen Verwendung.

Kunststoffscheiben für Fahrzeuge werden typischerweise im Mehrkomponenten-Spritzguss-Verfahren hergestellt. Üblicherweise wird im Randbereich einer solchen Scheibe eine dunkel eingefärbte, meist schwarze, opake Komponente auf eine transparente Komponente aufgebracht. Im Bereich der opaken Komponente kann die Scheibe für den Betrachter unsichtbar mit der Fahrzeugkarosserie verbunden, beispielsweise verklebt sein.

Durch eine Markierung oder Beschriftung können beispielsweise ein Herstellercode, Genehmigungszeichen, ein Produktionsdatum oder optische Effekte auf die Scheibe aufgebracht werden. Es sind verschiedene Verfahren zur Markierung von Kunststoffscheiben bekannt. Beim Spritzgießen der Scheibe kann die Markierung als negatives oder positives Relief in die Oberfläche der Scheibe eingebracht werden. Dabei sind allerdings Abbildungsschärfe, Kontrast, minimale Schriftgröße und Detailgrad beschränkt. Zudem können durch das Relief bei einer Lackierung der Scheibe grenzwertige Lackverlaufsstörungen auftreten.

Alternativ kann eine Markierung als Relief nach dem Spritzgießen in die Scheibe eingeprägt oder eingefräst werden. Auch hierbei können bei einer Lackierung der Scheibe nach der Markierung Verlaufsstörungen auftreten. Ein Aufbringen des Reliefs nach dem Lackieren der Scheibe beschädigt die Lackschicht.

Es sind auch Methoden zur Lasermarkierung von Kunststoffscheiben bekannt. Die Markierung beruht dabei auf einer Verdunklung eines Bereichs der Oberfläche der Scheibe infolge der Laserstrahlung. Die Markierung ist auch hierbei nicht vor mechanischer und chemischer Beschädigung sowie UV-Strahlung geschützt. Bei einer Lackierung der Scheibe nach der Lasermarkierung können Verlaufsstörungen auftreten. Ein Aufbringen der Markierung nach dem Lackieren der Scheibe beschädigt die Lackschicht. Die Verdunklung kann durch andere bekannte Verfahren auch im Inneren einer Kunststoffscheibe erzeugt werden. Da die verdunkelte Markierung vor dem Hintergrund der opaken Komponente im Randbereich der Scheibe nicht zu erkennen ist, muss die Markierung im transparenten Sichtbereich der Scheibe aufgebracht werden, wo sie störend auffallen kann.

Verfahren, mit denen eine Lasermarkierung in Form einer Verdunklung in polymere Werkstücke eingebracht werden kann, sind beispielsweise aus DE19944372A1, WO2010019194A1, DE19732306A1 und WO2010054077A2 bekannt.

Es sind auch Verfahren zur Lasermarkierung bekannt, bei denen eigens in das Werkstück eingebrachte lasersensitive Materialen zum Einsatz kommen, beispielsweise aus DE102009028937A1 und WO2010023102A1. Durch die Notwendigkeit der lasersensitiven Materialien wird die Herstellung der Werkstücke dabei allerdings erschwert.

Die Aufgabe der vorliegenden Erfindung ist es, ein markiertes polymeres Werkstück sowie ein Verfahren zu dessen Herstellung bereitzustellen, wobei die Nachteile nach dem Stand der Technik vermieden werden.

Die Aufgabe der vorliegenden Erfindung wird erfindungsgemäß durch ein lasermarkiertes polymeres Werkstück gemäß dem unabhängigen Anspruch 1 gelöst. Bevorzugte Ausführungen gehen aus den Unteransprüchen hervor.

Das erfindungsgemäße lasermarkierte polymere Werkstück umfasst zumindest die folgenden Merkmale:
- eine transparente Komponente und
- auf zumindest einem Bereich der transparenten Komponente aufgebracht eine opake Komponente,
wobei eine Markierung mit mindestens einem Laser durch die transparente Komponente hindurch in die zur transparenten Komponente hingewandte Oberfläche der opaken Komponente eingebracht ist.

Der Vorteil des erfindungsgemäßen lasermarkierten polymeren Werkstücks liegt in der Positionierung der Markierung im Inneren des polymeren Werkstücks. Dadurch ist die Markierung vor mechanischer und chemischer Beschädigung und sonstigen Umwelteinflüssen geschützt. Zudem führt die Markierung nicht zu Verlaufsstörungen, wenn das polymere Werkstück nach der Markierung mit einer Beschichtung überzogen wird. Zudem ist die Markierung im Bereich der opaken Komponente des polymeren Werkstücks angeordnet. Ist das erfindungsgemäße polymere Werkstück beispielsweise die Scheibe eines Fahrzeugs, so ist der transparente Sichtbereich nicht von der Markierung beeinträchtigt.

Die Aufgabe der vorliegenden Erfindung wird weiter erfindungsgemäß durch ein Verfahren zur Herstellung eines lasermarkierten polymeren Werkstücks gelöst, wobei:
a) eine transparente Komponente und eine opake Komponente durch Mehrkomponenten-Spritzgießen zu einem polymeren Werkstück verbunden werden,
b) die opake Komponente durch die transparente Komponente hindurch mit mindestens einem Laser bestrahlt wird und dabei eine Markierung in die opake Komponente eingebracht wird.

Die opake Komponente enthält ein Farbmittel. Die Markierung ist eine lokale Aufhellung der opaken Komponente.

Die Abmessungen des polymeren Werkstücks können breit variieren und damit hervorragend den Erfordernissen des Einzelfalls angepasst werden. Die Fläche des polymeren Werkstücks kann beispielsweise von 1 cm² bis 3 m² betragen. Bevorzugt weist das polymere Werkstück eine Fläche von 100 cm² bis 2,5 m² auf, wie sie für Scheiben von Fahrzeugen und im Bau- und Architekturbereich üblich sind.

Das polymere Werkstück umfasst erfindungsgemäß zumindest eine transparente Komponente und eine opake Komponente, wobei die opake Komponente zumindest auf einem Bereich der transparenten Komponente angeordnet ist. Das polymere Werkstück wird bevorzugt durch Mehrkomponenten-Spritzgießen hergestellt, wobei zunächst die transparente Komponente spritzgegossen wird und anschließend die opake Komponente auf zumindest einen Bereich der transparenten Komponente aufgetragen wird. Prinzipiell kann natürlich auch zunächst die opake und anschließend die transparente Komponente spritzgegossen werden. Das polymere Werkstück ist beispielsweise eine Fahrzeugscheibe, die eine transparente Polymerkomponente enthält, wobei im Randbereich umlaufend eine opake Polymerkomponente auf der transparenten Polymerkomponente angeordnet ist. Die Breite der opaken Komponente beträgt dabei beispielsweise von 1 cm bis 10 cm. Die opake Komponente bildet somit einen Rahmen.

Das polymere Werkstück ist bevorzugt plan oder leicht oder stark in einer Richtung oder in mehreren Richtungen des Raumes gebogen.

Die transparente Komponente des polymeren Werkstücks enthält bevorzugt zumindest Polyethylen (PE), Polycarbonate (PC), Polypropylen (PP), Polystyrol, Polybutadien, Polynitrile, Polyester, Polyurethane, Polymethylmethacrylate (PMMA), Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon.

Die transparente Komponente des polymeren Werkstücks enthält besonders bevorzugt Polycarbonate (PC) und / oder Polymethylmethacrylat (PMMA). Das ist besonders vorteilhaft im Hinblick auf die Transparenz, die Verarbeitung, die Festigkeit, die Witterungsbeständigkeit und die chemische Beständigkeit des polymeren Werkstücks.

Transparent bedeutet im Sinne der Erfindung, dass ein Betrachter durch die Komponente hindurchblicken kann und Objekte, die sich vom Betrachter aus gesehen hinter der Komponente befinden, erkennen kann. Die transparente Komponente kann farblos sein. Die transparente Komponente kann auch gefärbt oder getönt sein. Die Transmission der transparenten Komponente im sichtbaren Spektralbereich beträgt beispielsweise größer oder gleich 50% oder auch größer oder gleich 70%.

Opak bedeutet im Sinne der Erfindung, dass ein Betrachter nicht durch die Komponente hindurchblicken kann. Die Transmission der opaken Komponente im sichtbaren Spektralbereich ist also deutlich herabgesetzt und beträgt beispielsweise kleiner oder gleich 20%, kleiner oder gleich 10%, kleiner oder gleich 5%, insbesondere etwa 0%.

Die transparente Komponente weist bevorzugt eine Schichtdicke von 1 mm bis 20 mm, besonders bevorzugt von 3 mm bis 10 mm auf.

Die opake Komponente des polymeren Werkstücks enthält bevorzugt zumindest Polyethylen (PE), Polycarbonate (PC), Polypropylen (PP), Polystyrol, Polybutadien, Polynitrile, Polyester, Polyurethane, Polymethylmethacrylate, Polyacrylate, Polyester, Polyamide, Polyethylenterephthalat, Acrylnitril-Butadien-Styrol (ABS), Styrol-Acrylnitril (SAN), Acrylester-Styrol-Acrylnitril (ASA), Acrylnitril-Butadien-Styrol - Polycarbonat (ABS/PC) und / oder Copolymere oder Gemische davon, besonders bevorzugt Polycarbonate (PC), Polyethylenterephthalat (PET) und / oder Polymethylmethacrylat (PMMA).

Die opake Komponente des polymeren Werkstücks enthält zumindest ein Farbmittel. Durch das Farbmittel wird die Opazität der Komponente erreicht. Das Farbmittel kann anorganische und / oder organische Farbstoffe und / oder Pigmente enthalten. Das Farbmittel kann bunt oder unbunt sein. Geeignete Farbmittel sind dem Fachmann bekannt und können beispielsweise im *Colour Index* der *British Society of Dyers and Colourists* und der *American Association of Textile Chemists and Colorists* nachgeschlagen werden. Bevorzugt wird ein Schwarz-Pigment als Farbmittel verwendet, beispielsweise Pigmentruß (Carbon Black), Anilinschwarz, Beinschwarz, Eisenoxidschwarz, Spinellschwarz und / oder Graphit. Dadurch wird eine schwarze opake Komponente erreicht.

Die opake Komponente weist bevorzugt eine Schichtdicke von 0,5 mm bis 10 mm, besonders bevorzugt von 1 mm bis 7 mm auf.

Die Markierung wird erfindungsgemäß mittels eines Lasers aufgebracht. Die Strahlung des Lasers tritt über die von der opaken Komponente abgewandte Oberfläche der transparenten Komponente in das polymere Werkstück ein. Die Strahlung des Lasers wird in einer vorteilhaften Ausführung mittels eines optischen Elements, beispielsweise einer Linse oder eines Objektivs auf die Grenzfläche zwischen der transparenten Komponente und der opaken Komponente fokussiert. Die Brennweite des fokussierenden optischen Elementes beträgt bevorzugt von 10 mm bis 300 mm. Damit werden besonders gute Ergebnisse erzielt. Eine kleinere Brennweite des optischen Elements erfordert einen zu geringen Arbeitsabstand zwischen polymeren Werkstück und optischem Element während des Markierungsvorgangs. Eine größere Brennweite führt zu einer zu großen Ausdehnung des Laserfokus, wodurch das Auflösungsvermögen des Markierungsverfahrens und die Leistungsdichte im Fokus beschränkt werden.

Zwischen dem Laser und dem fokussierenden optischen Element kann die Strahlung des Lasers durch zumindest einen Lichtwellenleiter, beispielsweise eine Glasfaser geleitet werden. Es können auch weitere optische Elemente im Strahlengang des Lasers angeordnet sein.

In einer vorteilhaften Ausführung wird die Markierung durch eine Bewegung der Strahlung des Lasers in die zur transparenten Komponente hingewandte Oberfläche der opaken Komponente eingebracht. Es hat sich gezeigt, dass die Strahlung des Lasers zu einer Aufhellung der opaken Komponente im Bereich der Grenzfläche zwischen transparenter Komponente und opaker Komponente führt. Die Aufhellung ist durch die transparente Komponente hindurch deutlich als Markierung zu erkennen. Die Markierung erscheint bevorzugt als zumindest ein gleichmäßig heller Bereich auf der opaken Komponente.

Zur erfindungsgemäßen Lasermarkierung des polymeren Werkstücks ist es natürlich nötig, dass die transparente Komponente Laserlicht durchlässt, dass also zumindest ein Teil der Strahlung des Lasers durch die transparente Komponente hindurch transmittiert wird. Der durch die transparente Komponente transmittierte Anteil der Strahlung des Lasers beträgt beispielsweise größer oder gleich 50%, bevorzugt größer oder gleich 70%, besonders bevorzugt größer oder gleich 80% und ganz besonders bevorzugt größer oder gleich 90%.

Die Markierung kann eine beliebige Gestalt aufweisen, beispielsweise eine zweidimensionale geometrische Figur, ein Piktogramm, ein Firmen- oder Markensymbol, eine Beschriftung in Form von Buchstaben und / oder Zahlen oder Kombinationen davon. Durch die Markierung kann das polymere Werkstück beispielsweise mit einem Herstellercode, einem Genehmigungszeichen, einem Produktionsdatum oder mit optischen Effekten versehen werden.

Die Bewegung der Strahlung des Lasers erfolgt bevorzugt durch zumindest einen Spiegel, der mit einem bewegbaren Bauteil verbunden ist. Durch das bewegbare Bauteil kann der Spiegel in zwei Richtungen, bevorzugt zwei zueinander orthogonalen Richtungen, besonders bevorzugt horizontal und vertikal, verkippt werden. Die Bewegung der Strahlung des Lasers kann auch durch mehrere mit jeweils einem bewegbaren Bauteil verbundene Spiegel erfolgen. Beispielsweise kann die Bewegung der Strahlung des Lasers durch zwei Spiegel erfolgen, wobei ein Spiegel in horizontaler Richtung und der andere Spiegel in vertikaler Richtung verkippt werden kann. Das polymere Werkstück ist während der Lasermarkierung bevorzugt in einer Bauteilaufnahme fixiert.

Alternativ kann die Strahlung des Lasers ortsfest sein und das polymere Werkstück während des Markierungsvorgangs bewegt werden.

Die Strahlung des Lasers wird bevorzugt mit einer Geschwindigkeit von 200 mm/s bis 5000 mm/s über die Grenzfläche zwischen der transparenten Komponente und der opaken Komponente bewegt. Damit werden besonders gute Ergebnisse erzielt.

Als Laser wird bevorzugt ein Festkörper-Laser verwendet, beispielsweise ein Nd:YAG-Laser, ein Nd:Cr:YAG-Laser, ein Nd:Ce:YAG-Laser oder ein Yb:YAG-Laser. Besonders bevorzugt wird ein Faserlaser verwendet mit beispielsweise einer Ytterbium-dotierten Glasfaser als aktives Medium. Das ist besonders vorteilhaft im Hinblick auf die Strahlqualität der Laserstrahlung. Die Emissionswellenlänge des Lasers beträgt bevorzugt von 600 nm bis 3000 nm, besonders bevorzugt von 900 nm bis 1500 nm, beispielsweise etwa 1064 nm. Damit werden besonders gute Ergebnisse erzielt.

Es kann erfindungsgemäß aber auch ein anderer Laser verwendet werden, beispielsweise ein Gaslaser, wie CO₂-Laser.

Der Laser kann im Dauerstrich-Betrieb verwendet werden. Bevorzugt wird der Laser gepulst betrieben. Das ist besonders vorteilhaft im Hinblick auf eine hohe Leistungsdichte im polymeren Substrat. Die Pulsfrequenz beträgt bevorzugt von 1 kHz bis 500 kHz, besonders bevorzugt von 20 kHz bis 150 kHz. Die Pulslänge beträgt bevorzugt von 5 ns bis 300 ns, besonders bevorzugt von 50 ns bis 150 ns. Das ist besonders vorteilhaft im Hinblick auf die Leistungsdichte des Lasers bei der Lasermarkierung.

Die Ausgangsleistung der Strahlung des Lasers beträgt bevorzugt von 1 W bis 50 W, besonders bevorzugt von 15 W bis 35 W. Das ist besonders vorteilhaft im Hinblick auf eine effiziente Markierung des polymeren Substrats.

In einer vorteilhaften Ausgestaltung der Erfindung wird eine Schutzbeschichtung auf das polymere Werkstück aufgebracht. Bevorzugt werden thermisch härtende oder UV-härtende Lacksysteme auf Basis von Polysiloxanen, Polyacrylaten, Polymethacrylaten und / oder Polyurethanen verwendet. Die Schutzbeschichtung hat bevorzugt eine Schichtdicke von 1 µm bis 50 µm, besonders bevorzugt von 2 µm bis 25 µm. Der besondere Vorteil liegt in der Kratzbeständigkeit und Witterungsbeständigkeit sowie der chemischen Resistenz des polymeren Werkstücks durch die Schutzbeschichtung.

Die Schutzbeschichtung kann auch farbgebende Verbindungen und Pigmente, UV-Blocker, Konservierungsstoffe sowie Komponenten zur Erhöhung der Kratzfestigkeit, beispielsweise Nanopartikel enthalten.

Die Schutzbeschichtung kann beispielsweise durch ein Tauch-, Flut-, oder Sprühverfahren auf das polymere Werkstück aufgebracht werden. Die Schutzbeschichtung wird nach dem Aufbringen bevorzugt über Temperatur und / oder UV-Licht-Eintrag ausgehärtet. Bei der Herstellung des polymeren Werkstücks durch Spritzgießen kann die Schutzbeschichtung auch durch ein *In Mould* Coating-Verfahren aufgebracht werden.

Als Schutzbeschichtung geeignete Produkte sind beispielsweise AS4000, AS4700, Varianten des PHC587 oder UVHC300, die von der Firma Momentive hergestellt werden.

Die Schutzbeschichtung kann auch mehrere Schichten umfassen, bevorzugt eine haftvermittelnde Schicht auf dem polymeren Werkstück und eine Lackschicht auf der haftvermittelnden Schicht. Die haftvermittelnde Schicht kann beispielsweise Acrylate enthalten und eine Schichtdicke von 0,4 µm bis 5 aufweisen. Die Lackschicht kann beispielsweise Polysiloxane enthalten und eine Schichtdicke von 1 µm bis 15 aufweisen. Die haftvermittelnde Schicht wird nach dem Aufbringen bevorzugt getrocknet, bevor die Lackschicht aufgebracht wird.

Die Schutzbeschichtung wird bevorzugt nach der erfindungsgemäßen Lasermarkierung des polymeren Werkstücks aufgebracht. Die Markierung ist im Inneren des polymeren Werkstücks angeordnet, so dass bei einem Aufbringen der Schutzbeschichtung nach der Lasermarkierung keine Verlaufsstörungen oder sonstigen nachteiligen Beeinträchtigungen der Schutzbeschichtung und / oder der Markierung auftreten.

Das lasermarkierte polymere Werkstück wird bevorzugt als Scheibe oder als Bestandteil einer Scheibe von Fortbewegungsmitteln für den Verkehr auf dem Lande, in der Luft oder zu Wasser verwendet, insbesondere als Heck-, Windschutz-, Seiten- und / oder Dachscheibe von Kraftfahrzeugen. Das lasermarkierte polymere Werkstück kann als Fensterscheibe verwendet werden, aber auch als Interieurteil, beispielsweise als Schalter oder Taster.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine Draufsicht auf eine Ausgestaltung des erfindungsgemäßen lasermarkierten polymeren Werkstücks,
- Fig. 2: einen Schnitt entlang A-A' durch das erfindungsgemäße lasermarkierte polymere Werkstück gemäß Figur 1,
- Fig. 2a: eine vergrößerte Darstellung des Abschnitts Z aus Figur 2,
- Fig. 3: einen Schnitt entlang A-A' durch das erfindungsgemäße polymere Werkstück gemäß Figur 1 während der Lasermarkierung,
- Fig. 4: ein detailliertes Flussdiagramm des erfindungsgemäßen Verfahrens.

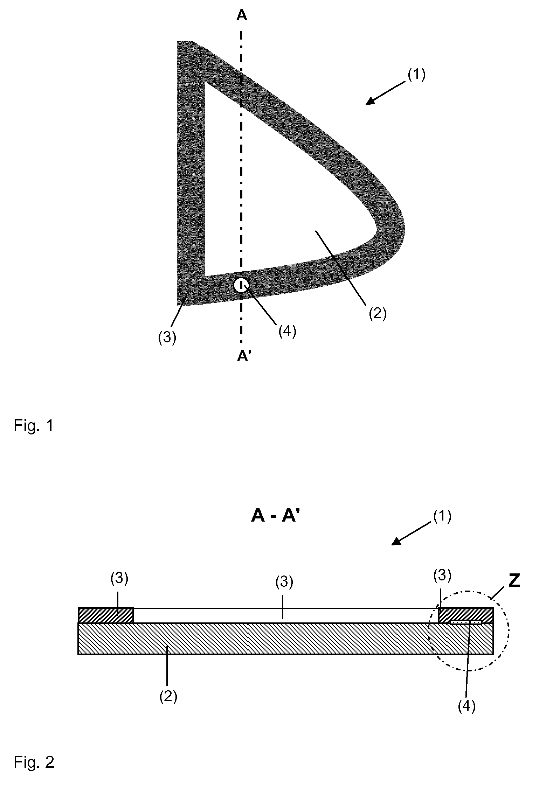

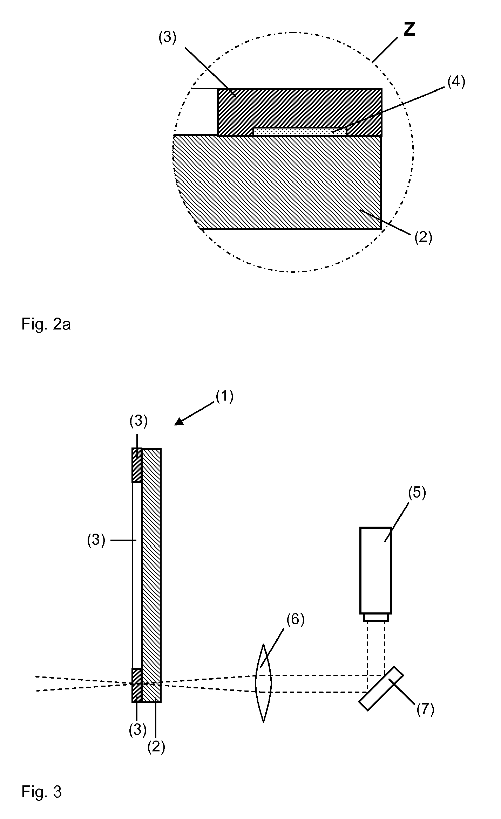

Fig. 1 und Fig. 2 zeigen je ein Detail eines erfindungsgemäßen polymeren Werkstücks 1. Es ist eine Seitenscheibe eines Personenkraftwagens und weist eine Höhe von 30 cm und eine Breite von 28 cm auf. Das polymere Werkstück 1 enthält eine transparente Komponente 2. Im Randbereich des polymeren Werkstücks 1 ist eine opake Komponente 3 umlaufend mit einer Breite von 4 cm auf der transparenten Komponente 2 angeordnet. Fig. 1 zeigt eine Draufsicht auf die von der opaken Komponente 3 abgewandte Oberfläche der transparenten Komponente 2. Die opake Komponente 3 ist in der Draufsicht durch die transparente Komponente 2 hindurch zu erkennen. Das polymere Werkstück 1 wurde durch Mehrkomponenten-Spritzgießen hergestellt. Die transparente Komponente 2 weist eine Dicke von 4 mm auf und enthält Polycarbonat (PC). Die opake Komponente 3 weist eine Dicke von 2 mm auf. Die opake Komponente 3 enthält ein mineralgefülltes Polycarbonat (PC)-Polyethylenterephthalat (PET)-Gemisch. Das Ausgangsmaterial zum Spritzgießen der opaken Komponente 3 wurde von der Firma Teijin Chemicals Ltd. bereitgestellt (Panlite Y-0346 Colour No. TG6654). Im Bereich der opaken Komponente 3 ist das polymere Werkstück 1 nicht transparent. Die Seitenscheibe kann somit im Bereich der opaken Komponente 3 für den Betrachter nicht sichtbar mit der Fahrzeugkarosserie verbunden, beispielsweise verklebt werden, wobei die opake Komponente 3 bevorzugt zum Innenraum des Fahrzeugs hingewandt angeordnet ist.

In mindestens einem Bereich der opaken Komponente 3 ist eine Markierung 4 angeordnet. Die Markierung 4 ist an der Grenzfläche zwischen transparenter Komponente 2 und opaker Komponente 3 erfindungsgemäß in die opake Komponente 3 eingebracht. Die Markierung 4 ist als aufgehellter Bereich an der Oberfläche der opaken Komponente 3 realisiert. Die Markierung 4 ist der Einfachheit halber als ausgefüllter Kreis dargestellt. Die Markierung 4 kann in der Praxis beispielsweise ein Herstellersymbol, ein Markensymbol, einen Herstellercode, ein Produktionsdatum und / oder ein Genehmigungszeichen umfassen.

Durch die erfindungsgemäße Anordnung der Markierung 4 im Inneren des polymeren Werkstücks 1 an der Grenzfläche zwischen transparenter Komponente 2 und opaker Komponente 3 ist die Markierung 4 vorteilhaft vor Umwelteinflüssen wie beispielsweise mechanischer Beschädigung geschützt. Zudem führt die Markierung 4 bei einem Aufbringen einer nicht dargestellten Beschichtung des polymeren Werkstücks 1, beispielsweise eines Schutzlackes, nach der Lasermarkierung nicht zu Lackverlaufsstörungen.

Fig. 2a zeigt eine vergrößerte Darstellung des in Figur 2 durch einen Kreis gekennzeichneten Abschnitts Z. Zu sehen ist ein Bereich der transparenten Komponente 2, ein Bereich der opaken Komponente 3 sowie die in die zur transparenten Komponente 2 hingewandte Oberfläche der opaken Komponente 3 eingebrachte Markierung 4.

Fig. 3 zeigt einen Schnitt A-A' durch das polymere Werkstück aus Fig. 1 während der erfindungsgemäßen Lasermarkierung. Die Strahlung des Lasers 5 tritt über die von der opaken Komponente 3 abgewandte Oberfläche der transparenten Komponente 2 in das polymere Werkstück 1 ein. Die Strahlung eines Lasers 5 ist mittels eines Objektivs 6 auf die Grenzfläche zwischen transparenter Komponente 2 und opaker Komponente 3 des polymeren Werkstücks 1 fokussiert. Die Brennweite des Objektivs 6 beträgt 160 mm. Der Laser 5 ist ein diodengepumpter Faserlaser mit einer 2 m langen Ytterbium-dotierten Glasfaser als aktives Medium. Die Emissionswellenlänge des Lasers 5 beträgt um 1063 nm. Der Laser 5 wird gepulst betrieben mit einer Pulsdauer von 110 ns und einer Pulsfolgefrequenz von 60 kHz. Im Strahlengang des Lasers 5 ist ein Spiegel 7 angeordnet. Durch Bewegung des Spiegels 7 kann der Fokus der Strahlung des Lasers 5 über die Grenzfläche zwischen transparenter Komponente 2 und opaker Komponente 3 des polymeren Werkstücks 1 bewegt werden.

Die Strahlung des Lasers 5 führt bereits nach einer Einwirkdauer im Bereich weniger Millisekunden zu einer deutlichen Aufhellung an der Oberfläche der opaken Komponente 3. Durch die Bewegung der fokussierten Strahlung des Lasers 5 über die Grenzfläche zwischen transparenter Komponente 2 und opaker Komponente 3 des polymeren Werkstücks 1 kann somit eine Markierung 4 dauerhaft aufgebracht werden, beispielsweise ein Herstellersymbol, ein Herstellercode, ein Produktionsdatum oder ein Genehmigungszeichen.

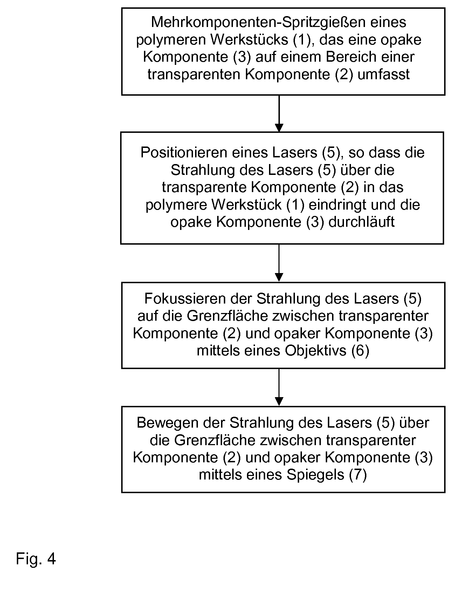

Fig. 4 zeigt beispielhaft das erfindungsgemäße Verfahren zur Herstellung eines lasermarkierten polymeren Werkstücks 1.

Testproben von erfindungsgemäßen lasermarkierten polymeren Werkstücken 1 gemäß der Figur 1 wurden mit dem erfindungsgemäßen Verfahren angefertigt. Die Lasermarkierung wurde mit dem Laserbeschriftungssystem DP20F der Firma FOBA, umfassend einen Laser 5, einen Spiegel 7 und ein Objektiv 6, durchgeführt. Die Markierung 4 umfasste Buchstaben, Zahlen und geometrische Figuren. Bei allen Testproben war die Markierung 4 deutlich zu erkennen. Die minimale Strichstärke der Markierung 4 betrug etwa 0,1 mm.

Es war für den Fachmann unerwartet und überraschend, dass auf einfache und zuverlässige Weise eine Markierung 4 eines polymeren Werkstücks 1 bereitgestellt werden kann, ohne die Oberfläche des polymeren Werkstücks 1 zu verändern.

### Bezugszeichenliste

- (1): polymeres Werkstück
- (2): transparente Komponente
- (3): opake Komponente
- (4): Markierung
- (5): Laser
- (6): Objektiv
- (7): verkippbarer Spiegel

- A-A': Schnittlinie
- Z: Abschnitt des polymeren Werkstücks 1

## Patentansprüche

1. Ein lasermarkiertes polymeres Werkstück (1), zumindest umfassend:
- eine transparente Komponente (2) und
- auf zumindest einem Bereich der transparenten Komponente (2) aufgebracht eine opake Komponente (3), welche zumindest ein Farbmittel enthält,
wobei eine Markierung (4) mit mindestens einem Laser (5) durch die transparente Komponente (2) hindurch in die zur transparenten Komponente (2) hingewandte Oberfläche der opaken Komponente (3) eingebracht ist und wobei die Markierung (4) eine Aufhellung der opaken Komponente (3) ist.

2. Werkstück (1) nach Anspruch 1, wobei die Dicke der transparenten Komponente (2) von 1 mm bis 20 mm, bevorzugt von 3 mm bis 10 mm beträgt.

3. Werkstück (1) nach Anspruch 1 oder 2, wobei die Dicke der opaken Komponente (3) von 0,5 mm bis 10 mm, bevorzugt von 1 mm bis 7 mm beträgt.

4. Werkstück (1) nach einem der Ansprüche 1 bis 3, das Polycarbonat, Polyethylenterephthalat und / oder Polymethylmethacrylat enthält und durch Mehrkomponenten-Spritzgießen hergestellt ist.

5. Werkstück (1) nach einem der Ansprüche 1 bis 4, wobei die opake Komponente (3) ein Schwarzpigment enthält, bevorzugt Pigmentruß, Anilinschwarz, Beinschwarz, Eisenoxidschwarz, Spinellschwarz und / oder Graphit.

6. Werkstück (1) nach einem der Ansprüche 1 bis 5, wobei die opake Komponente (3) im Randbereich des polymeren Werkstücks (1) umlaufend mit einer bevorzugten Breite von 1 cm bis 10 cm auf der transparenten Komponente (2) angeordnet ist.

7. Werkstück (1) nach einem der Ansprüche 1 bis 6, wobei die Markierung (4) einen Buchstaben, eine Zahl, eine geometrische Figur, ein Symbol und / oder ein Piktogramm umfasst.

8. Werkstück (1) nach einem der Ansprüche 1 bis 7, wobei die Markierung (4) als zumindest ein gleichmäßig heller Bereich auf der opaken Komponente (3) erscheint.

9. Werkstück (1) nach einem der Ansprüche 1 bis 8, auf dem eine Schutzbeschichtung angeordnet ist, die ein Polysiloxan, ein Polyacrylat, ein Polymethacrylat und / oder ein Polyurethan enthält und bevorzugt eine Dicke von 1 µm bis 50 µm, besonders bevorzugt von 2 µm bis 25 µm aufweist.

10. Verfahren zur Herstellung eines lasermarkierten polymeren Werkstücks (1), wobei
a) eine transparente Komponente (2) und eine opake Komponente (3), welche zumindest ein Farbmittel enthält, durch Mehrkomponenten-Spritzgießen zu einem polymeren Werkstück (1) verbunden werden,
b) die opake Komponente (3) durch die transparente Komponente (2) hindurch mit mindestens einem Laser (5) bestrahlt wird und dabei eine Markierung (4) in die opake Komponente (3) eingebracht wird, wobei die Markierung (4) eine Aufhellung der opaken Komponente (3) ist.

11. Verfahren nach Anspruch 10, wobei die Markierung (4) durch eine Bewegung der Strahlung des Lasers (5) in die opake Komponente (3) eingebracht wird und die Strahlung des Lasers (5) bevorzugt mit einer Geschwindigkeit von 200 mm/s bis 5000 mm/s bewegt wird.

12. Verfahren nach Anspruch 10 oder 11, wobei die Strahlung des Lasers (5) auf die Grenzfläche zwischen der transparenten Komponente (2) und der opaken Komponente (3) fokussiert wird.

13. Verfahren nach einem der Ansprüche 10 bis 12, wobei die Emissionswellenlänge des Lasers (5) von 600 nm bis 3000 nm, bevorzugt von 900 nm bis 1500 nm beträgt.

14. Verfahren nach einem der Ansprüche 10 bis 13, wobei der Laser (5) gepulst betrieben wird und die Pulsdauer bevorzugt von 5 ns bis 300 ns, besonders bevorzugt von 50 ns bis 150 ns beträgt und die Pulsfolgefrequenz bevorzugt von 1 kHz bis 500 kHz, besonders bevorzugt von 20 kHz bis 150 kHz beträgt.

15. Verfahren nach einem der Ansprüche 10 bis 14, wobei die Ausgangsleistung des Lasers (5) von 1 W bis 50 W, bevorzugt von 15 W bis 35 W beträgt.

16. Verwendung eines lasermarkierten polymeren Werkstücks (1) nach einem der Ansprüche 1 bis 9 als Scheibe oder als Bestandteil einer Scheibe von Fortbewegungsmitteln für den Verkehr auf dem Lande, in der Luft oder zu Wasser, insbesondere als Windschutz-, Heck-, Seiten und / oder Dachscheibe von Kraftfahrzeugen.

## Claims

1. A laser-marked polymeric workpiece (1), comprising at least:
- a transparent component (2) and
- an opaque component (3), which contains at least one colorant, applied to at least one region of the transparent component (2),
wherein a mark (4) is introduced with at least one laser (5) through the transparent component (2) into the surface of the opaque component (3) facing the transparent component (2) and wherein the mark (4) is a brightening of the opaque component (3).

2. Workpiece (1) according to claim 1, wherein the thickness of the transparent component (2) is from 1 mm to 20 mm, preferably from 3 mm to 10 mm.

3. Workpiece (1) according to claim 1 or 2, wherein the thickness of the opaque component (3) is from 0.5 mm to 10 mm, preferably from 1 mm to 7 mm.

4. Workpiece (1) according to one of claims 1 through 3, that contains polycarbonate, polyethylene terephthalate, and / or polymethyl methacrylate and is produced by multi-component injection molding.

5. Workpiece (1) according to one of claims 1 through 4, wherein the opaque component (3) contains a black pigment, preferably carbon black, aniline black, bone black, iron oxide black, spinel black, and / or graphite.

6. Workpiece (1) according to one of claims 1 through 5, wherein the opaque component (3) is arranged on the transparent component (2) circumferentially in the edge region of the polymeric workpiece (1) with a preferred width from 1 cm to 10 cm.

7. Workpiece (1) according to one of claims 1 through 6, wherein the mark (4) comprises a letter, a number, a geometric figure, a symbol, and / or a pictogram.

8. Workpiece (1) according to one of claims 1 through 7, wherein the mark (4) appears as at least one uniformly bright region on the opaque component (3).

9. Workpiece (1) according to one of claims 1 through 8, on which a protective coating is arranged, which contains a polysiloxane, a polyacrylate, a polymethacrylate, and / or a polyurethane and preferably has a thickness from 1 µm to 50 µm, particularly preferably from 2 µm to 25 µm.

10. Method for producing a laser-marked polymeric workpiece (1), wherein
a) a transparent component (2) and an opaque component (3), which contains at least one colorant, are bonded by multi-component injection molding to form a polymeric workpiece (1),
b) the opaque component (3) is irradiated through the transparent component (2) with at least one laser (5) and in the process a mark (4) is introduced into the opaque component (3), wherein the mark (4) is a brightening of the opaque component (3).

11. Method according to claim 10, wherein the mark (4) is introduced into the opaque component (3) by a movement of the beam of the laser (5) and the beam of the laser (5) is preferably moved at a speed from 200 mm/s to 5000 mm/s.

12. Method according to claim 10 or 11, wherein the beam of the laser (5) is focused on the boundary surface between the transparent component (2) and the opaque component (3).

13. Method according to one of claims 10 through 12, wherein the emission wavelength of the laser (5) is from 600 nm to 3000 nm, preferably from 900 nm to 1500 nm.

14. Method according to one of claims 10 through 13, wherein the laser (5) is operated in pulsed mode and the pulse duration is preferably from 5 ns to 300 ns, particularly preferably from 50 ns to 150 ns and the pulse repetition frequency is preferably from 1 kHz to 500 kHz, particularly preferably from 20 kHz to 150 kHz.

15. Method according to one of claims 10 through 14, wherein the output power of the laser (5) is from 1 W to 50 W, preferably from 15 W to 35 W.

16. Use of a laser-marked polymeric workpiece (1) according to one of claims 1 through 9 as a pane or as a part of a pane of means of transportation for travel on land, in the air, or on water, in particular as a windshield, rear window, side window, and / or roof pane of motor vehicles.

## Revendications

1. Pièce polymère (1) marquée au laser, comprenant au moins:
- un composant transparent (2) ; et
- un composant opaque (3) qui est appliqué sur au moins une zone du composant transparent (2) et qui contient au moins un colorant,
un marquage (4) étant incorporé par au moins un laser (5) à travers le composant transparent (2) dans la surface du composant opaque (3) tournée vers le composant transparent (2) et le marquage (4) étant un éclaircissement du composant opaque (3).

2. Pièce (1) selon la revendication 1, dans laquelle l'épaisseur du composant transparent (2) est de 1 mm à 20 mm, de préférence de 3 mm à 10 mm.

3. Pièce (1) selon l'une des revendications 1 ou 2, dans laquelle l'épaisseur du composant opaque (3) est de 0,5 mm à 10 mm, de préférence de 1 mm à 7 mm.

4. Pièce (1) selon l'une des revendications 1 à 3, qui contient du polycarbonate, du poly(téréphtalate d'éthylène) et/ou du poly(méthacrylate de méthyle) et est obtenue par moulage par injection à plusieurs composants.

5. Pièce (1) selon l'une des revendications 1 à 4, dans laquelle le composant opaque (3) contient un pigment noir, de préférence du noir de carbone, du noir d'aniline, du noir d'os, du noir d'oxyde de fer, du noir de spinelle et/ou du graphite.

6. Pièce (1) selon l'une des revendications 1 à 5, dans laquelle le composant opaque (3) est disposé sur le composant transparent (2) de manière périphérique dans la région de bordure de la pièce polymère (1) avec une largeur préférée de 1 cm à 10 cm.

7. Pièce (1) selon l'une des revendications 1 à 6, dans laquelle le marquage (4) comprend une lettre, un nombre, une figure géométrique, un symbole et/ou un pictogramme.

8. Pièce (1) selon l'une des revendications 1 à 7, dans laquelle la marquage (4) apparaît comme au moins une zone uniformément plus claire sur le composant opaque (3).

9. Pièce (1) selon l'une des revendications 1 à 8, sur laquelle est disposé un revêtement de protection, lequel contient un polysiloxane, un polyacrylate, un polyméthacrylate et/ou un polyuréthane et présente, de préférence, une épaisseur de 1 µm à 50 µm, de manière davantage préférée de 2 µm à 25 µm.

10. Procédé de fabrication d'une pièce polymère (1) marquée au laser, dans lequel
a) un composant transparent (2) et un composant opaque (3), qui contient au moins un colorant, sont assemblés en une pièce polymère (1) par moulage par injection à plusieurs composants ;
b) le composant opaque (3) est irradié à travers le composant transparent (2) par au moins un laser (5) et par là un marquage (4) est intégré dans le composant opaque (3), le marquage (4) étant un éclaircissement du composant opaque (3).

11. Procédé selon la revendication 10, dans lequel le marquage (4) est intégré dans le composant opaque (3) par un déplacement du rayonnement du laser (5) et le rayonnement du laser (5) est déplacé, de préférence avec une vitesse de 200 mm/s à 5000 mm/s.

12. Procédé selon l'une des revendications 11 ou 12, dans lequel le rayonnement du laser (5) est focalisé sur la surface limite entre le composant transparent (2) et le composant opaque (3).

13. Procédé selon l'une des revendications 10 à 12, dans lequel la longueur d'onde d'émission du laser (5) est de 600 nm à 3000 nm, de préférence de 900 nm à 1500 nm.

14. Procédé selon l'une des revendications 10 à 13, dans lequel le laser (5) est actionné en mode pulsé et la durée d'impulsion est de préférence de 5 ns à 300 ns, de manière davantage préférée de 50 ns à 150 ns, et la fréquence de répétition des impulsions est de préférence de 1 kHz à 500 kHz, de manière davantage préférée de 20 kHz à 150 kHz.

15. Procédé selon l'une des revendications 10 à 14, dans lequel la puissance de sortie du laser (5) est de 1 W à 50 W, de préférence de 15 à 35 W.

16. Utilisation d'une pièce polymère (1) marquée au laser selon l'une des revendications 1 à 9 comme vitre ou comme composant d'une vitre de moyens de locomotion pour le transport terrestre, aérien et par eau, en particulier comme pare-brise, lunette arrière, vitre latérale et/ou panneau de toit de véhicules automobiles.
